Europäisches Patentamt

European Patent Office

Office européen des brevets

(11) Publication number: **0 178 856 B1**

(12) **EUROPEAN PATENT SPECIFICATION**

(45) Date of publication of patent specification: **20.12.89**

(21) Application number: **85307282.5**

(22) Date of filing: **11.10.85**

(51) Int. Cl.⁴: **A 41 D 31/00, B 32 B 15/02, A 62 B 17/00, A 41 D 31/02**

(54) **Protective sheet for articles of clothing and the like.**

(30) Priority: **15.10.84 US 660746**

(43) Date of publication of application:
**23.04.86 Bulletin 86/17**

(45) Publication of the grant of the patent:
**20.12.89 Bulletin 89/51**

(84) Designated Contracting States:
**AT BE CH DE FR GB IT LI LU NL SE**

(56) References cited:
**EP-A-0 034 392**
**CH-A- 516 053**
**FR-A-2 395 832**
**GB-A-2 078 093**

(73) Proprietor: **Athey, Robert D. Jr.**
**P.O. Box 1459 El Cerrito**
**California 94530 (US)**

(72) Inventor: **Athey, Robert D. Jr.**
**P.O. Box 1459 El Cerrito**
**California 94530 (US)**

(74) Representative: **Barker, Rosemary Anne et al**
**Barlow, Gillett & Percival 94 Market Street**
**Manchester M1 1PJ (GB)**

Courier Press, Leamington Spa, England.

## Description

This invention relates to a protective sheet which may be used to manufacture clothing.

Standard protective articles of clothing, such as gloves, are normally composed of an organic polymer. It has been found that toxic chemicals such as benzene permeate such articles within a relatively short time. It is believed that the migration of toxic chemicals through the polymer matrix is due to the similarity of the structure of the permeating chemical and the material used to construct the protective article.

One solution is to increase the thickness of the protective article to extend the time of migration for as long as possible. However, the article of clothing then becomes bulky and, in any case, the effectiveness of the article of clothing reduces as it is used.

Constructing articles of non-flexible and non-polymer material results in a structure that is quite rigid and again not usable in an environment containing toxic chemicals.

The use of aluminized polyvinylchloride to produce a light-weight suit for protecting a wearer against explosive blasts and airborne toxic or corrosive agents is disclosed in GB 2078093.

It is an object of the present invention to provide a protective sheet of enhanced durability and enhanced resistance to migration of organic chemicals therethrough, yet is still sufficiently flexible for making articles of clothing, and is itself easy and relatively cheap to manufacture.

In accordance with the present invention a protective sheet for use as an article of clothing or for a shelter comprises a first layer of soft pliant material which has a low initial tensile modulus of elasticity. The first layer may consist of such materials as butyl rubber, polyurethane, polyethylene, and the like. The low initial tensile modulus of elasticity may be defined as a strain without failure of at least 5% for an application of stress of between $6.89 \times 10^4$ and $6.89 \times 10^5$ Pa. The first layer is intended to touch the skin of the user in many cases.

A second layer is also provided and is held to the first layer by any suitable process. The second layer comprises a ductile material which may be capable of forming positive ions and is impermeable to fluids. The second layer is thinner than the first layer. The second layer may, for example, be a metal, a metal compound such as a metal oxide, or an alloy.

The ductility of the material of the second layer may be defined by an extension of one to four percent at a tensile stress of $6.89 \times 10^6$ Pa.

Since the second layer may be damaged by scratching, a third layer is fixed to the second layer. The third layer is constructed of a material which is flexible, relatively oxygen impermeable and scratch resistant. The scratch resistance measured on the pencil hardness test should be at least a value of 2H. Preferably the material of the third layer is also water impermeable.

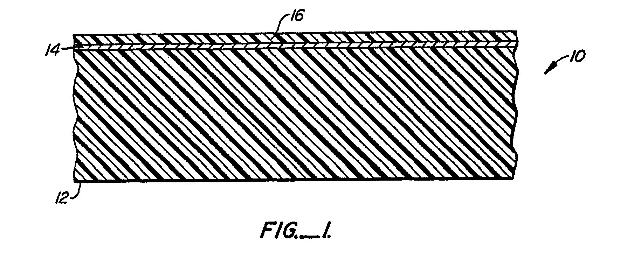

The invention will be described further, by way of example, with reference to the accompanying drawing in which the single figure is a fragmentary sectional view of a preferred embodiment of the protective sheet of the invention.

The protective sheet 10 includes a first layer 12, which is constructed of a soft pliant material having a low initial tensile modulus of elasticity. In other words the first layer is stretchable, the term stretchable being defined as a strain without failure of at least 5% for an application of stress of between $6.89 \times 10^4$ and $6.89 \times 10^5$ Pa. This layer 12 may, for example, be composed of materials used in the prior art for making gloves such as butyl rubber, polyurethane, polyethylene, nitrile rubber, natural rubber, silicone rubber or polyvinylchloride (plasticized).

A second layer 14, which is relatively thin, is applied to the first layer 12. The second layer 14 should be impermeable to fluids such as toxic organic chemicals, e.g. benzene, and it should be ductile so that when the sheet 10 is employed as an article of clothing it does not form any cracks during flexure. The second layer 14 may be composed of a material capable of forming positive ions or a material of high polarity. Metals, alloys, and metal compounds fall into this category. The second layer 14 may be applied or formed on the first layer 12 by lamination, vacuum evaporation or sputtering. The latter techniques permit the layer 14 to be quite thin. In certain cases the layer 14 can be thin enough to be transparent to visible light waves. In addition, electroplating or electroless plating may be employed, but in these cases the layer 14 would be thicker than the film obtained from the aforementioned techniques. The first layer 12 may be as thick as 0.025 inches (0.635 mm approx.) whilst the second layer 14 may vary between 0.1 micron and 0.002 inches (0.051 mm approx). A range of 0.001 to 0.002 inches (0.025 to 0.051 mm approx.) is preferred for the second layer 14.

A third layer 16 is also employed to protect the second layer 14 against traumatic damage or corrosion. Second layer metals such as silver, copper, zinc, tin, lead, the platinum group metals and nickel would require protection in this way. Gold, although not readily corrosive, is easily scratched. Aluminum would form its own protective coating in the form of aluminum oxide but the latter is fairly brittle, having a tendency to form cracks or fissures. Alloys such as brass, bronze and pewter possess the same problems as the pure metals. The third layer 16 must be a flexible, oxygen and water impermeable, scratch resistant material. A varnish, paint, or lacquer would suffice in this regard. The third layer 16 would be required to have a minimum hardness of 2H.

Articles of clothing such as masks, gloves, hats, and the like are usually may be dipping, injection or blow moulding techniques. In certain cases gloves are formed by simply laminating two sheets of precut patterns together. The first layer 12 may be formed in this manner and then the second layer 14 may be

2

applied thereto by the techniques described above. However, in the case of lamination the second layer 14 may be preformed as a foil and laminated to the first layer 12 before formation of the article of clothing therefrom. It should be noted, that the forming of layers 12, 14 and 16 may be accomplished before formation into articles of clothing or shelters, such as tents. Lacquers such as polyurethane lacquer, acrylic lacquer, epoxy lacquer and cellulosic lacquer are usable for the third layer 16.

In order to describe the invention more completely the following example is given. However, it should be understood that the invention is not limited to this specific example except in so far as it includes limitations appearing in the appended claims.

Example

First and second cups composed of polystyrene were provided. The first and second cups included pigmentation on their inner and outer surfaces.

The outer surface of the second cup was coated by a thin layer of aluminium by vacuum evaporation and top coated with a transparent acrylic lacquer to a thickness of no greater than 1 mm. The outer surface of the first cup was not coated with aluminium and/or the acrylic lacquer leaving the pigmentation visible thereupon.

The first and second cups were each supported by a beaker and filled with 25 ml of methylisobutylketone, a solvent which readily attacks polystyrene.

The following table shows the results observed:

| Elapsed time | First cup | Second cup |
|---|---|---|
| 30 min. | No visible change | No visible change |
| 60 min. | Pigment and polymer build up in bottom of cup from attack of sidewalls | Pigment and polymer build up in bottom cup from attack of sidewalls |
| 90 min. | No change | No change |
| 120 min. | No change | No change |
| 150 min. | Pigment and polymer build up increasing | No change |
| 170 min. | Bottom of cup dropped into beaker cut off at the solvent/air interface | No change |
| 210 min. | Bottom of cup dissolved completely | No change |
| 240 min. | No change | No change |
| 300 min. | No change | No change |
| 360 min. | No change | Metal showing at solvent air interface, but no solvent has passed through cup |
| 390 min. | No change | No change |
| 12 hrs. | No change | No change |
| 24 hrs. | No change | No change |
| 36 hrs. | No change | No change |

It should be noted in this example that the polystyrene was penetrated by the solvent. Rigidity is deemed to be an unimportant characteristic in this regard. Also, it is intended that this example demonstrate that pigmentation found in the polystyrene does not block penetration by the solvent employed.

3

# EP 0 178 856 B1

## Claims

1. A protective sheet for use as an article of clothing comprising a first layer (12) of soft pliant material having a low initial tensile modulus of elasticity, a second layer (14) which is held to the first layer (12) and is thinner than the first layer, the second layer (14) comprising a ductile material capable of forming positive ions and being impermeable to fluids, the said first and second layers (12, 14), forming opposite first and second surfaces of the protective sheet, respectively, with the first surface intended to serve as the innermost layer of the article of clothing, characterised in that a third layer (16) comprising a flexible, oxygen impermeable, scratch resistant material is held onto the second layer (14).

2. A protective sheet according to claim 1 wherein the material of the second layer (14) is a metal or a metal alloy.

3. A protective sheet according to claim 2 wherein the material of the second layer (14) is a metal alloy chosen from the group comprising brass bronze, and pewter.

4. A protective sheet for use as an article of clothing comprising a first layer (12) of soft pliant material having a low initial tensile modulus of elasticity, a second layer (14) which is held to the first layer (12) and is thinner than the first layer, the second layer (14) comprising a ductile material of high polarity and being impermeable to fluids, the first and second layers (12, 14) forming opposite first and second surfaces of the protective sheet, respectively, with the first surface intended to serve as the innermost layer of the article of clothing, characterised in that a third layer (16) comprising a flexible, oxygen impermeable, scratch resistant material is held onto the second layer (14).

5. A protective sheet according to claim 4 wherein the material of the second layer (14) is a metal or a metallic compound.

6. A protective sheet according to any of claims 1, 2, 4 or 5 wherein the material of the second layer (14) is a metal chosen from the group consisting of gold, silver, copper, zinc, tin, lead, aluminium, platinum, rhodium, palladium, iridium, ruthenium, osmium and nickel.

7. A protective sheet according to any preceding claim wherein the material of the first layer is chosen from the group comprising butyl rubber, polyurethane, polyethylene, nitrile rubber, natural rubber, silicone rubber and polyvinyl chloride.

8. A protective sheet according to any preceding claim wherein the low initial tensile modulus of elasticity of the material of the first layer (12) is defined by a strain without failure of at least 5%, for an application of stress of between $6.89 \times 10^4$ and $6.89 \times 10^5$ Pa.

9. A protective sheet according to any preceding claim wherein the ductility of said material of the second layer (14) is defined by an extension of 1%—4% at a tensile stress of $6.89 \times 10^6$ Pa.

10. A protective sheet according to any preceding claim wherein the material of the third layer (16) is a varnish, or a paint, or a lacquer.

11. A protective sheet according to any preceding claim wherein the scratch resistance of said material of the third layer (16) possess a minimum hardness of 2H with a pencil hardness test.

12. A protective sheet of claims 1 or 6 in which said third layer (16) material is chosen from the group comprising polyurethane lacquer, acrylic lacquer, epoxy lacquer and cellulosic lacquer.

## Patentansprüche

1. Schutzbahn für einen Bekleidungsgegenstand, umfassend eine erste Schicht (12) aus weichem, geschmeidigem Material mit einem niedrigen anfänglichen Zugelastizitätsmodul, eine zweite Schicht (14), die an der ersten Schicht (12) gehalten und dünner als die erste Schicht ist, wobei die zweite Schicht (14) ein dehnbares Material umfaßt, das positive Ionen bilden kann und flüssigkeitsundurchlässig ist, und die ersten und zweiten Schichten (12, 14) entgegengesetzte erste bzw. zweite Oberflächen der Schutzbahn bilden, wobei die erste Oberfläche als innerste Schicht des Bekleidungsgegenstandes dienen soll, dadurch gekennzeichnet, daß eine ein elastisches, sauerstoffundurchlässiges, kratzfestes Material umfassende dritte Schicht (16) auf der zweiten Schicht (14) gehalten ist.

2. Schutzbahn nach Anspruch 1, bei der das Material der zweiten Schicht (14) ein Metall oder eine Metallegierung ist.

3. Schutzbahn nach Anspruch 2, bei der das Material der zweiten Schicht (14) eine aus der Messung, Bronze und Weißmetall umfassenden Gruppe gewählte Metallegierung ist.

4. Schutzbahn für einen Bekleidungsgegenstand, umfassend eine erste Schicht (12) aus weichem, geschmeidigem Material mit einem niedrigen anfänglichem Zugelastizitätsmodul, eine zweite Schicht (14), die an der ersten Schicht (12) gehalten und dünner als die erste Schicht ist, wobei die zweite Schicht (14) ein dehnbares, hochgepoltes und flüssigkeitsundurchlässiges Material umfaßt, und die ersten und zweiten Schichten (12, 14) entgegengesetzte erste bzw. zweite Oberflächen der Schutzbahn bilden, wobei die erste Oberfläche als innerste Schicht des Bekleidungsgegenstandes dienen soll, dadurch gekennzeichnet, daß eine ein elastisches, sauerstoffundurchlässiges, kratzfestes Material umfassende dritte Schicht (16) auf der zweiten Schicht (14) gehalten ist.

5. Schutzbahn nach Anspruch 4, bei der das Material der zweiten Schicht (14) ein Metall oder eine Metallzusammensetzung ist.

6. Schutzbahn nach einem der Ansprüche 1, 2, 4 oder 5, bei der das Material der zweiten Schicht (14) ein aus der aus Gold, Silber, Kupfer, Zink, Zinn, Blei, Aluminium, Platin, Rhodium, Palladium, Iridium, Ruthenium, Osmium und Nickel bestehenden Gruppe gewähltes Metall ist.

7. Schutzbahn nach einem der vorstehenden Ansprüche, bei der das Material der ersten Schicht aus der Butylkautschuk, Polyurethan, Polyäthylen, Nitrilkautschuk, Naturkautschuk, Silikonkautschuk und Polyvinylchlorid umfassenden Gruppe gewählt ist.

8. Schutzbahn nach einem der vorstehenden Ansprüche, bei der der niedrige anfängliche Zugelastizitätsmodul des Materials der ersten Schicht (12) durch eine Dehnung ohne Bruch von zumindest 5% für einen Spannungsangriff zwischen $6,89\times10^4$ und $6,89\times10^5$ Pa definiert ist.

9. Schutzbahn nach einem der vorstehenden Ansprüche, bei der das Dehnvermögen des besagten Materials der zweiten Schicht (14) durch eine Ausdehnung von 1%—4% bei einer Zugspannung von $6,89\times10^6$ Pa definiert ist.

10. Schutzbahn nach einem der vorstehenden Ansprüche, bei der das Material der dritten Schicht (16) ein Firnis oder eine Farbe oder ein Lack ist.

11. Schutzbahn nach einem der vorstehenden Ansprüche, bei der die Kratzfestigkeit des besagten Materials der dritten Schicht (16) eine Mindesthärte von 2H bei einem Punkthärtetest besitzt.

12. Schutzbahn nach Anspruch 1 oder 6, bei der das Material der dritten Schicht (16) aus der Polyurethanlack, Acryllack, Expoxylack und Zelluloselack umfassenden Gruppe gewählt ist.

**Revendications**

1. Feuille protectrice utilisée pour un article vestimentaire comportant une première couche (12) de matériau souple pliable ayant un faible module initial d'élasticité en traction, une deuxième couche (14) qui est fixée sur la première couche (12) et qui est plus mince que cette première couche, la deuxième couche (14) comportant un matériau ductile susceptible de former des ions positifs et qui est imperméable aux fluides, lesdites première et deuxième couches (12, 14) formant respectivement une première et deuxième surfaces opposées de la feuille protectrice, la première surface étant destinée à servir de couche intérieure extrême de l'article vestimentaire, caractérisée en ce qu'une troisième couche (16) contenant un matériau flexible, imperméable à l'oxygène et résistant à l'abrasion est fixée sur la deuxième couche (14).

2. Feuille protectrice selon la revendication 1, dans laquelle le matériau de la deuxième couche (14) est un métal ou un alliage métallique.

3. Feuille protectrice selon la revendication 2, dans laquelle le matériau de la deuxième couche (14) est un alliage métallique choisi dans le groupe comportant le laiton, le bronze et l'étain d'art.

4. Feuille protectrice utilisée pour un article vestimentaire, comportant une première couche (12) de matériau souple pliable ayant un faible module initial d'élasticité en traction, une deuxième couche (14) qui est fixée sur la première couche et qui est plus mince que cette première couche, la deuxième couche (14) comportant un matériau ductile de polarité élevée et qui imperméable aux fluides, la première et la deuxième couches (14) formant respectivement une première et une deuxième surfaces opposées de la feuille protectrice, la première surface étant destinée à servir de couche intérieure extrême de l'article vestimentaire, caractérisée en ce qu'une troisième couche (16) contenant un matériau flexible, imperméable à l'oxygène et résistant à l'abrasion est fixé sur la deuxième couche (14).

5. Feuille protectrice selon la revendication 4, dans laquelle le matériau de la deuxième couche (14) est un métal ou un composé métallique.

6. Feuille protectrice selon l'une quelconque des revendications 1, 2, 4 ou 5, dans laquelle le matériau de la deuxième couche (14) est un métal choisi dans le groupe constitué de l'or, de l'argent, du cuivre, du zinc, de l'étain, du plomb, de l'aluminium, du platine, du rhodium, du palladium, de l'oridium, du ruthénium, de l'osmium et du nickel.

7. Feuille protectrice selon l'une quelconque des revendications précédentes, dans laquelle le matériau de la première couche est choisi dans le groupe comportant le caoutchouc butyl, le polyuréthane, le polyéthylène, le caoutchouc nitrile, le caoutchouc naturel, le caoutchouc silicone et le chlorure de polyvinyle.

8. Feuille protectrice selon l'une quelconque des revendications précédentes, dans laquelle le faible module initial d'élasticité en traction du matériau de la première couche (12) est défini par une déformation sans rupture d'au moins 5%, pour une contrainte appliquée comprise entre $6,89\times10^4$ et $6,89\times10^5$ Pa.

9. Feuille protectrice selon l'une quelconque des revendications précédentes, dans laquelle la ductilité dudit matériau de la deuxième couche (14) est définie par un allongement de 1% à 4% sous une contrainte de traction de $6,89\times10^6$ Pa.

10. Feuille protectrice selon l'une quelconque des revendications précédentes, dans laquelle le matériau de la troisième couche (16) est un vernis, une peinture ou une laque.

11. Feuille protectrice selon l'une quelconque des revendications précédentes, dans laquelle la résistance à l'abrasion dudit matériau de la troisième couche (16) correspond à une dureté minimale de 2H lors d'un essai de dureté au crayon.

12. Feuille protectrice selon la revendication 1 ou 6, dans laquelle ledit matériau de la troisième couche (16) est choisi dans le groupe comportant les laques polyuréthane, les laques acryliques, les lacques époxydes et les laques cellulosiques.

5

FIG._1.